# EUROPÄISCHE PATENTANMELDUNG

(11) **EP 0 997 111 A2**
(43) Veröffentlichungstag der Anmeldung: **03.05.2000**
(21) Anmeldenummer: 99121333.1
(22) Anmeldetag: 26.10.1999
(51) Int. Cl.: A61C 3/02

(54) **Dentalinstrument**

(30) Priorität: 30.10.1998 DE 19850108
(71) Anmelder: Gebr. Brasseler GmbH & Co. KG, D-32657 Lemgo (DE)
(72) Erfinder: Neumeyer, Stefan, Dr., 93458 Eschlkam (DE); Danger, Karl-Heinz, 32758 Detmold (DE)
(74) Vertreter: Schmitz, Hans-Werner, Dipl.-Ing.

(57) **Zusammenfassung**

Die Erfindung bezieht sich auf ein Dentalinstrument mit einem in eine drehbare Halterung einspannbaren Schaft 1 und einem mit Schneiden versehenen Arbeitsbereich, wobei am freien Endbereich des Arbeitsbereichs ein gerundeter, verzahnter, erster, im wesentlichen kugelförmiger Fräsbereich 2, an diesen angrenzend ein zweiter verzahnter Fräsbereich 3 angeordnet sind, dadurch gekennzeichnet, daß angrenzend an den zweiten Fräsbereich 3 ein dritter verzahnter Fräsbereich 4 ausgebildet ist, wobei der erste Fräsbereich 2 zum Durchbohren einer äußeren Knochenschicht, der zweite Fräsbereich 3 zum Zerteilen eines Zahns und der dritte Fräsbereich 4 zum Zerspanen von Knochenmaterial ausgebildet sind.

## Beschreibung

Die Erfindung betrifft ein Dentalinstrument nach dem Oberbegriff des Hauptanspruchs.

Dentalinstrumente der beschriebenen Art sind in den unterschiedlichsten Ausgestaltungsformen aus dem Stand der Technik bekannt. Ihnen ist gemeinsam, daß sie hauptsächlich für einen speziellen Anwendungszweck konzipiert sind bzw. für den jeweiligen Bearbeitungsvorgang optimal angepaßt sind. Dies bedingt, daß der Zahnarzt bzw. Labortechniker eine Vielzahl von Instrumenten benötigt, die in der Abfolge der einzelnen Arbeitsschritte häufig gewechselt werden müssen. Abgesehen von Problemen der Sterilität ergibt sich eine nicht unerhebliche Kostenbelastung, da eine Vielzahl von Instrumenten vorgehalten werden muß.

Insbesondere in der Knochenchirurgie und dort besonders beim Entfernen von im Kiefer befindlichen, verlagerten Weisheitszähnen müssen die unterschiedlichsten Arbeitsschritte ausgeführt werden. Dabei ist der häufige Wechsel der Werkzeuge unerwünscht.

Die DE 84 11 017 U1 beschreibt ein Dentalinstrument, welches einen mit Schneiden versehenen Arbeitsbereich aufweist. Am freien Endbereich ist ein im wesentlichen kugelförmiger, gerundeter, erster Fräsbereich vorgesehen, an den sich ein verzahnter, zweiter Fräsbereich anschließt. Das Werkzeug ist aus Hartmetall gefertigt, der vordere erste Fräsbereich ist als Bohrwerkzeug, der zweite Fräsbereich als Finierer ausgestaltet. Die DE-AS 12 09 243 zeigt einen Bohrer für zahnärztliche Zwecke, bei welchem ein stirnseitiger, abgerundeter Fräsbereich vorgesehen ist, an den sich ein Schleifbereich anschließt. Ein ähnliches Werkzeug ist aus der DE-PS 865 781 vorbekannt.

Der Erfindung liegt die Aufgabe zugrunde, ein Dentalinstrument der eingangs genannten Art zu schaffen, welches bei einfachem Aufbau und einfacher, sicherer Handhabbarkeit an mehrere unterschiedliche Arbeitsschritte angepaßt ist.

Erfindungsgemäß wird die Aufgabe durch ein Dentalinstrument mit den Merkmalen des Hauptanspruchs gelöst. Die Unteransprüche zeigen weitere vorteilhafte Ausgestaltungen der Erfindung.

Im Rahmen der Erfindung ist somit vorgesehen, daß am freien Endbereich des Arbeitsbereichs des Dentalinstruments ein gerundeter, erster Fräsbereich ausgebildet ist. An diesen grenzt ein zweiter Fräsbereich an.

Das erfindungsgemäße Dentalinstrument zeichnet sich durch eine Reihe erheblicher Vorteile aus. Durch die aufeinanderfolgende Anordnung unterschiedlichster Fräsbereiche ist es möglich, diese den jeweiligen Arbeitsbedingungen anzupassen und beispielsweise hinsichtlich ihrer Schneidengeometrie, Schneidenausgestaltung, ihrer Form und Größe den nacheinander durchzuführenden Arbeitsschritten in optimaler Weise anzupassen. Das erfindungsgemäße Dentalinstrument vereinigt somit die unterschiedlichsten Schneidengeometrien, die beim Stand der Technik nur durch einzelne, separate Instrumente realisiert werden können.

In einer günstigen Weiterentwicklung der Erfindung ist beispielsweise vorgesehen, daß der erste Fräsbereich zum Durchbohren einer äußeren Knochenschicht, der zweite Fräsbereich zum Zerteilen eines Zahnes und zum Zerspanen von Knochenmaterial ausgebildet sind. Das Dentalinstrument kann somit in der Knochenchirurgie eingesetzt werden, um einen im Kiefer befindlichen, verlagerten Weisheitszahn zu entfernen.

Hierzu kann mittels des ersten Fräsbereichs die Knochendecke entfernt werden. Der zweite Fräsbereich ist dafür ausgebildet, den Zahn zu zerteilen, damit dieser entfernt und aus dem Kieferknochen ausgehebelt werden kann. Um aus der Knochenkavität restliche Knochensubstanz, insbesondere im Randwandungsbereich, abzutragen und um die Knochenkavität zu glätten, ist bei entsprechender Ausbildung der Verzahnung bzw. der Schneiden ebenfalls der zweite Fräsbereich vorgesehen.

Der Zahnarzt braucht somit für die drei Arbeitsschritte lediglich ein Dentalinstrument, da dieses zwei unterschiedliche Arbeitsbereiche aufweist. Die Größe bzw. Länge der Fräsbereiche ist dabei so wählbar, daß die Bearbeitungsvorgänge ungestört in der Abfolge ablaufen können. Die Gesamtlänge der zwei Fräsbereiche ergibt sich somit aus der maximal erforderlichen Arbeitstiefe.

Besonders günstig ist es, wenn der erste Fräsbereich kugelartig ausgebildet ist, er kann dabei in Form einer Halbkugel ausgestattet sein. Die Kugelform kann jedoch auch weiter ausgeprägt werden oder nur die Form einer kalottenförmigen Abrundung haben. Somit kann der erste Fräsbereich zum Durchbohren der äußeren Knochenschicht, der sogenannten Kompakta, besonders gut eingesetzt werden.

Nach der Eröffnung des Knochens mittels des ersten Fräsbereichs würde der zweite Fräsbereich zum Zerteilen des Zahnes gesetzt. Dieser zweite Fräsbereich kann entweder zylindrisch oder konisch ausgebildet sein, seine Verzahnung kann in Form einer feinverzahnten Kreuzverzahnung oder einer Diamantverzahnung ausgestattet werden.

Nachdem der Zahn mittels des zweiten Fräsbereichs zerteilt wurde, kann das erfindungsgemäße Dentalinstrument durch weiteren Einsatz seines zweiten Fräsbereichs dazu verwendet werden, das Knochenmaterial zu zerspanen. Hierzu kann es günstig sein, wenn der zweite Fräsbereich entweder konisch oder zylindrisch ausgebildet ist. Vorteilhafterweise weist der zweite Fräsbereich eine glatte Verzahnung oder eine Kreuzverzahnung auf, welche beide schnittfreudig sind. Die Universalverzahnung des zweiten Fräsbereichs ist günstigerweise so gewählt, daß ausreichende Spanräume vorgesehen sind, um das relativ weiche Knochenmaterial abtragen zu können.

Besonders vorteilhaft kann es sein, wenn sich an den zweiten Fräsbereich ein dritter Fräsbereich anschließt. Dieser kann dann dazu ausgebildet sein, Knochenmaterial zu zerspanen. Es ist somit keine Universalverzahnung für den zweiten und dritten Arbeitsschritt erforderlich, vielmehr können die Verzahnungen des zweiten und des dritten Fräsbereichs, wie oben erwähnt, unterschiedlich ausgebildet werden, um optimale Schnittparameter zu liefern. Auch der dritte Fräsbereich kann zylindrisch oder konisch sein, es können, bezogen auf die Hüllkurve des zweiten und des dritten Fräsbereichs, glatte Übergänge realisiert werden.

Im Rahmen der Erfindung sind die unterschiedlichsten Ausgestaltungsformen des ersten, zweiten und dritten Fräsbereichs möglich. Insbesondere können der zweite und der dritte Fräsbereich, wie erwähnt, zylindrisch oder konisch ausgebildet sein. Bei einer konischen Ausgestaltung beider Fräsbereiche können diese denselben Konuswinkel haben, so daß die beiden Fräsbereiche hinsichtlich ihrer Hüllkurve übergangslos ineinander übergehen. Es ist jedoch auch möglich, einen konischen und einen zylindrischen Fräsbereich miteinander zu kombinieren. Weiterhin können zusätzliche Übergangsbereiche vorgesehen sein, um entsprechende Durchmesserunterschiede realisieren zu können. Gleiches gilt für die Form und Größe des dritten Fräsbereichs. Dieser kann im wesentlichen denselben Durchmesser haben wie der zweite oder erste Fräsbereich, es ist jedoch auch möglich, diesen entsprechend größer auszubilden.

Im folgenden wird die Erfindung anhand eines Ausbildungsbeispiels in Verbindung mit der Zeichnung beschrieben. Dabei zeigt:
- Fig. 1: eine schematische Seitenansicht eines Ausführungsbeispiels des erfindungsgemäßen Dentalinstruments; und
- Fig. 2: ein weiteres Ausführungsbeispiel mit einer Halbkugel als erstem Fräsbereich.

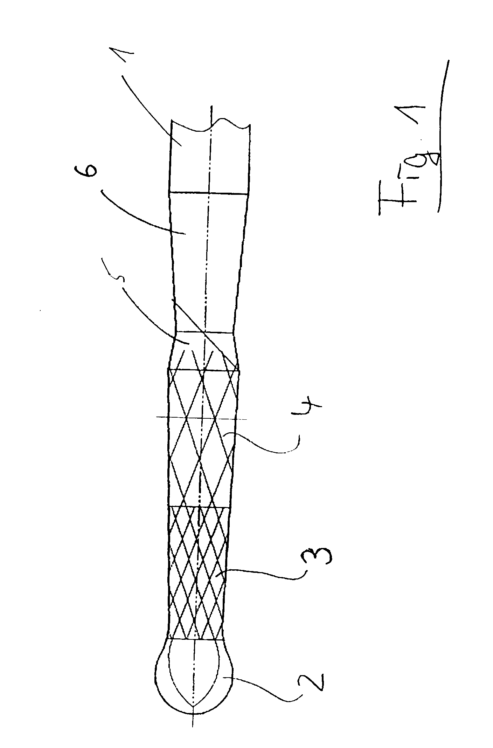

Das in Fig. 1 gezeigte Dentalinstrument umfaßt einen zylindrischen Schaft 1, welcher mit im einzelnen nicht dargestellten Einspannmitteln versehen ist, um in ein Handstück, ein Antriebsgerät oder ähnliches eingesteckt zu werden. Die Einspannmittel und Anschlüsse sind aus dem Stand der Technik bekannt, so daß auf diesen Bezug genommen werden kann.

Das freie Ende des Dentalinstruments weist einen ersten Fräsbereich 2 auf, welcher teilkugelartig ausgestattet ist. Angrenzend an den ersten Fräsbereich ist ein komischer zweiter Fräsbereich 3 vorgesehen, der mit einer feinverzahnten Kreuzverzahnung ausgestattet ist. Angrenzend an den zweiten Fräsbereich 3 ist ein dritter Fräsbereich 4 vorgesehen, welcher eine gröbere Kreuzverzahnung mit gröberen Spanräumen hat. Auch der dritte Fräsbereich 4 ist konisch ausgebildet. Er weist denselben Konuswinkel auf wie der zweite Fräsbereich 3, so daß sich der zweite und der dritte Fräsbereich hinsichtlich ihrer Hüllkurven glatt aneinanderfügen.

Am hinteren Ende des dritten Fräsbereichs 4 ist ein komischer Übergangsbereich 5 ausgebildet, an dem sich ein ebenfalls konischer Übergangsbereich 6 anschließt. Dieser geht dann in den Schaft 1 über. Die Übergangsbereiche 5 und 6 dienen insbesondere dazu, einen Übergang von einem Schaftdurchmesser zu schaffen, dessen Durchmesser sich von dem Durchmesser des dritten Fräsbereichs 4 unterscheidet.

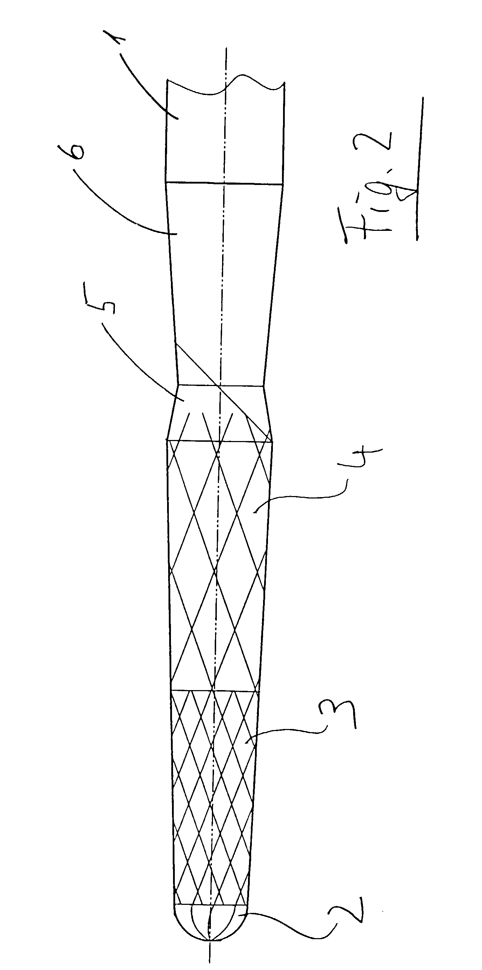

Die Fig. 2 zeigt ein weiteres Ausführungsbeispiel. Gleiche Bezugszeichen bezeichnen gleiche Teile. Der Unterschied zu dem in Fig. 1 gezeigten Ausführungsbeispiel liegt darin, daß der erste Fräsbereich nur halbkugelförmig, d.h. nur entsprechend abgerundet, ausgestattet ist.

Das erfindungsgemäße Dentalinstrument ist bevorzugterweise aus Hartmetall gefertigt. Dieses Material gewährleistet zum einen eine lange Standzeit der Schneiden und gute Schnittparameter und ermöglicht zum anderen die Herstellung unterschiedlichster Verzahnungen an unterschiedlichen Bereichen des Dentalinstruments.

Die Erfindung ist nicht auf das gezeigte Ausführungsbeispiel beschränkt. Vielmehr ergeben sich im Rahmen der Erfindung vielfältige Abwandlungs- und Modifikationsmöglichkeiten.

## Patentansprüche

1. Dentalinstrument mit einem in eine drehbare Halterung einspannbaren Schaft (1) und einem mit Schneiden versehenen Arbeitsbereich, wobei am freien Endbereich des Arbeitsbereichs ein gerundeter, verzahnter, erster, im wesentlichen kugelförmiger Fräsbereich (2), an diesen angrenzend ein zweiter verzahnter Fräsbereich (3) angeordnet sind, dadurch gekennzeichnet, daß angrenzend an den zweiten Fräsbereich (3) ein dritter verzahnter Fräsbereich (4) ausgebildet ist, wobei der erste Fräsbereich (2) zum Durchbohren einer äußeren Knochenschicht, der zweite Fräsbereich (3) zum Zerteilen eines Zahns und der dritte Fräsbereich (4) zum Zerspanen von Knochenmaterial ausgebildet sind.

2. Dentalinstrument nach Anspruch 1, dadurch gekennzeichnet, daß der erste Fräsbereich (2) kugelartig ausgebildet ist.

3. Dentalinstrument nach Anspruch 1, dadurch gekennzeichnet, daß der erste Fräsbereich (2) teilkugelartig ausgebildet ist.

4. Dentalinstrument nach einem der Ansprüche 1 bis 3, dadurch gekennzeichnet, daß der zweite Fräsbereich (3) zylindrisch ausgestaltet ist.

5. Dentalinstrument nach einem der Ansprüche 1 bis 3, dadurch gekennzeichnet, daß der zweite Fräsbereich (3) konisch ausgestaltet ist.

6. Dentalinstrument nach einem der Ansprüche 1 bis 5, dadurch gekennzeichnet, daß der zweite Fräsbereich (3) mit einer feinverzahnten Verzahnung versehen ist.

7. Dentalinstrument nach einem der Ansprüche 1 bis 5, dadurch gekennzeichnet, daß der zweite Fräsbereich (3) mit einer Kreuzverzahnung versehen ist.

8. Dentalinstrument nach einem der Ansprüche 1 bis 5, dadurch gekennzeichnet, daß der zweite Fräsbereich (3) mit einer Diamantverzahnung ausgestaltet ist.

9. Dentalinstrument nach einem der Ansprüche 1 bis 8, dadurch gekennzeichnet, daß der dritte Fräsbereich (4) zylindrisch ausgestaltet ist.

10. Dentalinstrument nach einem der Ansprüche 1 bis 8, dadurch gekennzeichnet, daß der dritte Fräsbereich (4) konisch ausgebildet ist.

11. Dentalinstrument nach einem der Ansprüche 1 bis 10, dadurch gekennzeichnet, daß der dritte Fräsbereich (4) eine glatte Verzahnung aufweist.

12. Dentalinstrument nach einem der Ansprüche 1 bis 10, dadurch gekennzeichnet, daß der dritte Fräsbereich (4) mit einer Kreuzverzahnung versehen ist.
